# EUROPEAN PATENT SPECIFICATION

(11) **EP 1 994 828 B1**
(45) Date of publication and mention of the grant of the patent: **06.06.2012**
(21) Application number: 08103956.2
(22) Date of filing: 14.05.2008
(51) Int. Cl.: A21B 3/04, A47J 27/04, F24C 15/16

(54) **Oven and pan arrangement for steam cooking of foods**
Ofen- und Garbehältnisanordnung zum Dampfgaren von Lebensmitteln
Agencement de four et de bac pour cuir des aliments à la vapeur

(30) Priority: 22.05.2007 IT MI20070186 U
(43) Date of publication of application: 26.11.2008
(73) Proprietor: Whirlpool Corporation, Benton Harbor, MI 49022 (US)
(72) Inventor: Venezia, Michele, 21025 Comerio (IT); Mazzetti, Cristina, 21025 Comerio (IT)
(74) Representative: Guerci, Alessandro

(56) References cited:
- EP-A1- 1 538 396
- EP-A2- 0 517 681
- FR-A1- 2 663 721
- JP-A- 7 158 855

## Description

The present invention relates to an oven and pan arrangement in accordance with the introduction to the main claim, said arrangement being adapted to steam-cooking foods.

Ovens arranged for steam-cooking foods therein are known, for instance from EP-A-517681. Generally, these ovens comprise a conduit for the steam (generated in a known dedicated part of the oven), opening into the bottom of the oven compartment and arranged to cooperate with a pan aperture intended to be superposed on the corresponding opening of said conduit. However such ovens have to be arranged for the aforesaid use by modifying a standard (electrical or gas) oven (for example by providing electrical heating elements on both the upper and lower wall), thus involving an increase in the production cost of such known ovens.

From EP 1538396 it is known an oven in which steam is fed and distributed into the oven cavity in an even manner, through a steam distribution system.

An object of the present invention is to provide an oven and pan arrangement adapted for food preparation by steam-cooking, which represents an improvement over similar already known oven and pan arrangements.

A particular object of the invention is to provide an arrangement of the stated type in which the oven is of simple construction and of low production cost comparable to that of electric or gas ovens.

These and other objects which will be apparent to the expert of the art are attained by an oven and pan arrangement for steam-cooking foods in accordance with the accompanying claims.

The present invention will be better understood from the accompanying drawings, which are provided by way of nonlimiting example, and in which:

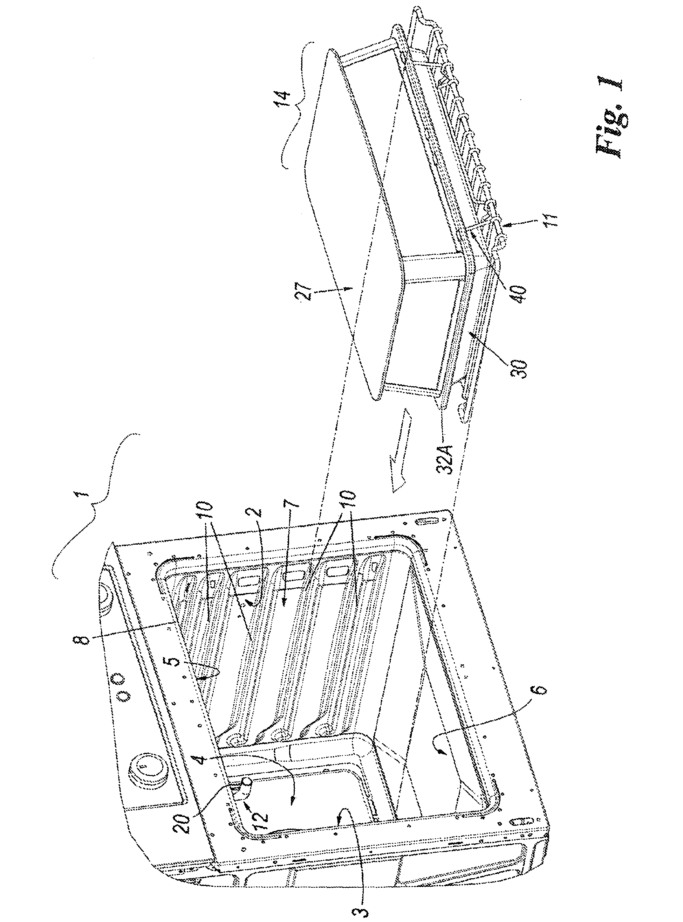

Figure 1 is a perspective view of an oven, with a pan shown in the position extracted from the oven, this latter and said pan defining an arrangement according to the invention;

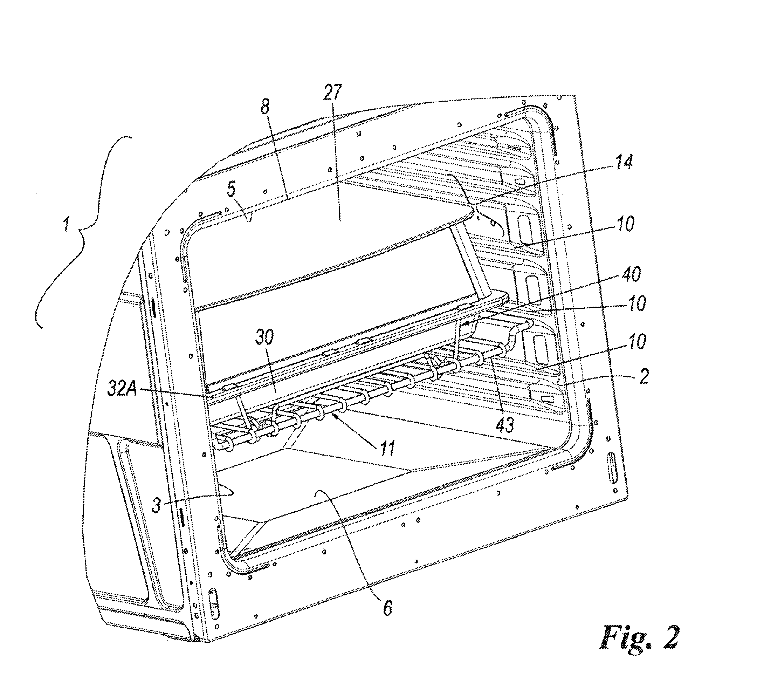

Figure 2 is a view similar to that of Figure 1, but with the pan inserted into the oven and ready for use;

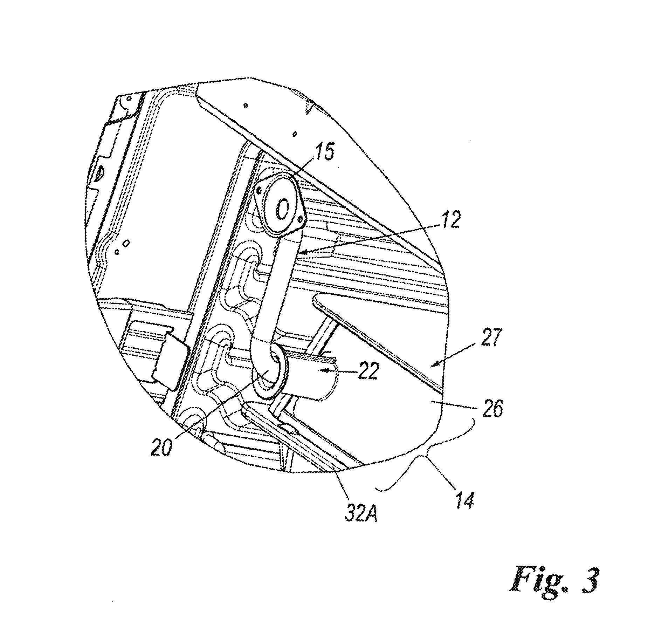

Figure 3 is a view from the rear of the oven of Figure 2, with some parts removed for greater clarity;

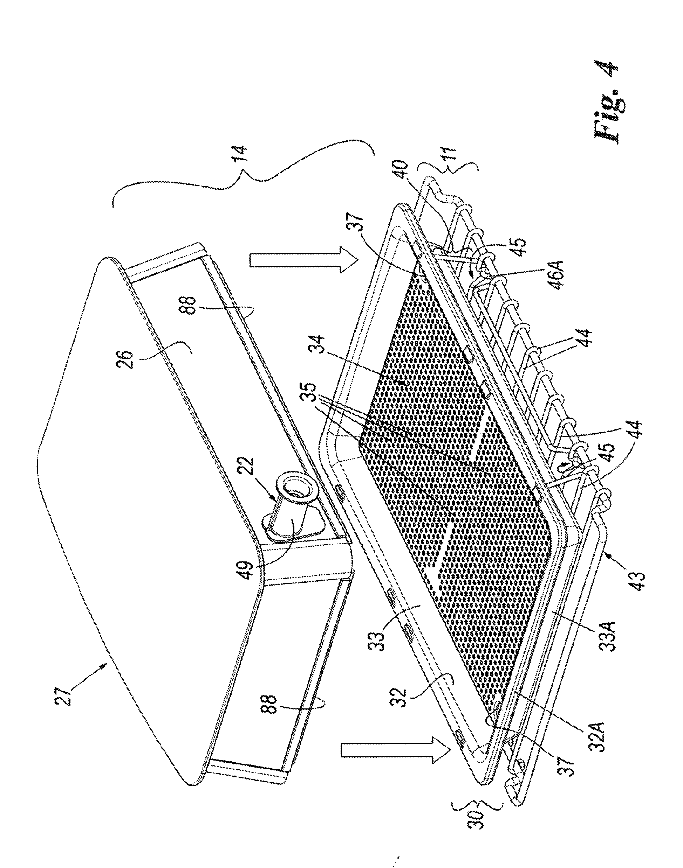

Figure 4 is a perspective view of the pan of Figure 1 taken from the rear during assembly;

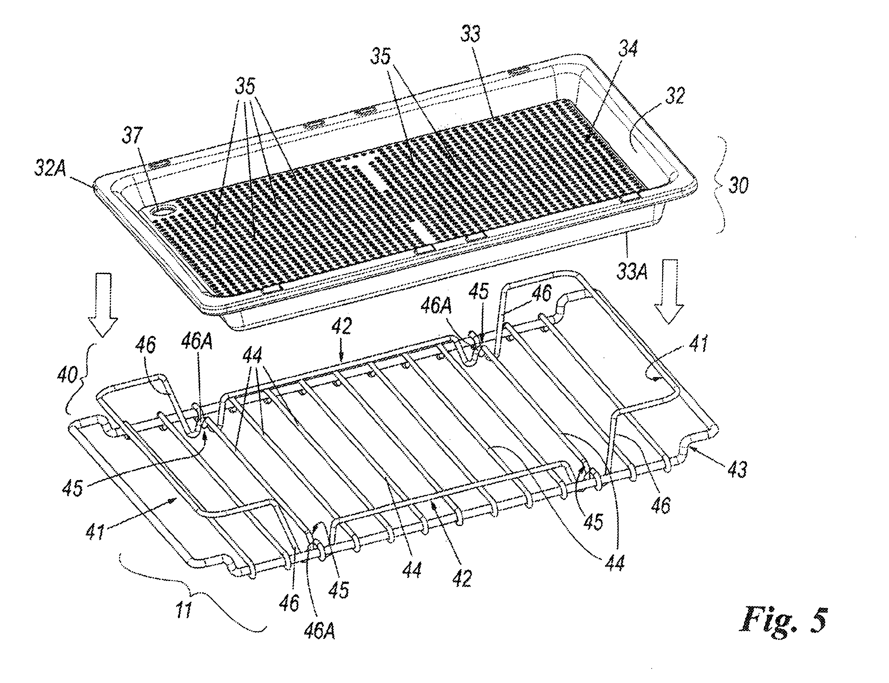

Figure 5 is a perspective view of a part of the pan of Figure 4 shown during its engagement with a support grid of the oven;

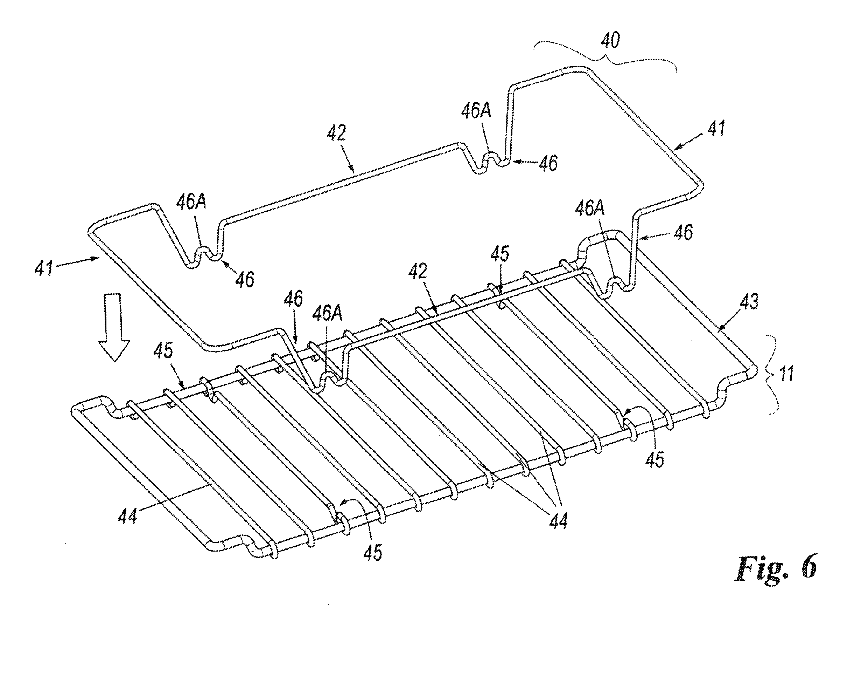

Figure 6 is an exploded perspective view of the grid of Figure 1;

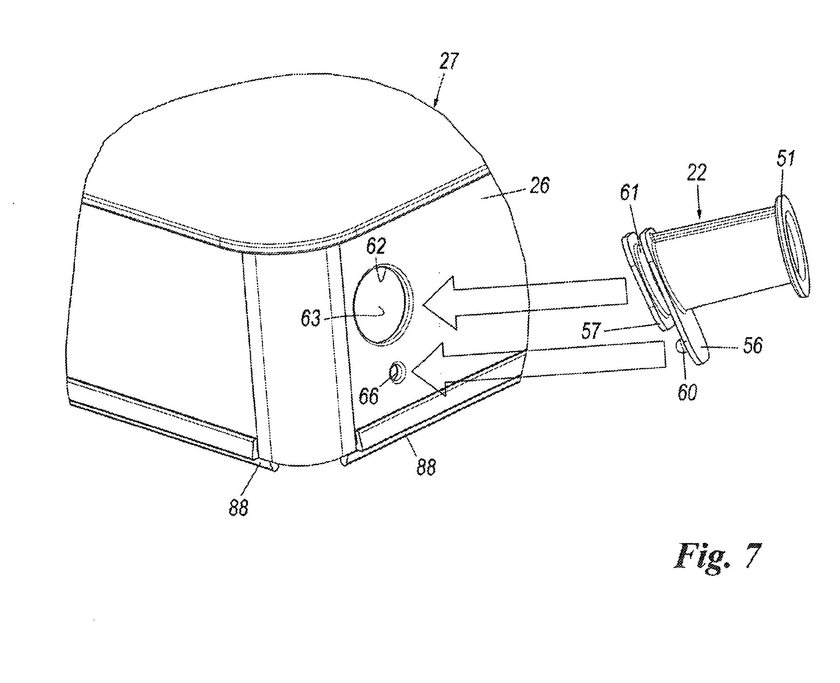

Figure 7 is a partial exploded perspective view of a rear part of the pan of Figure 1;

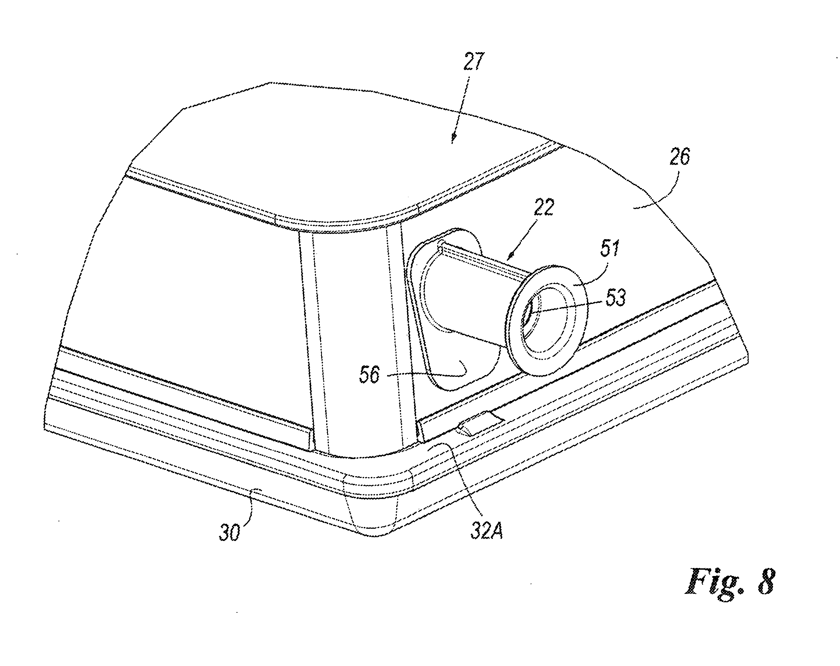

Figure 8 is a perspective view of the pan of Figure 7 shown with its components assembled;

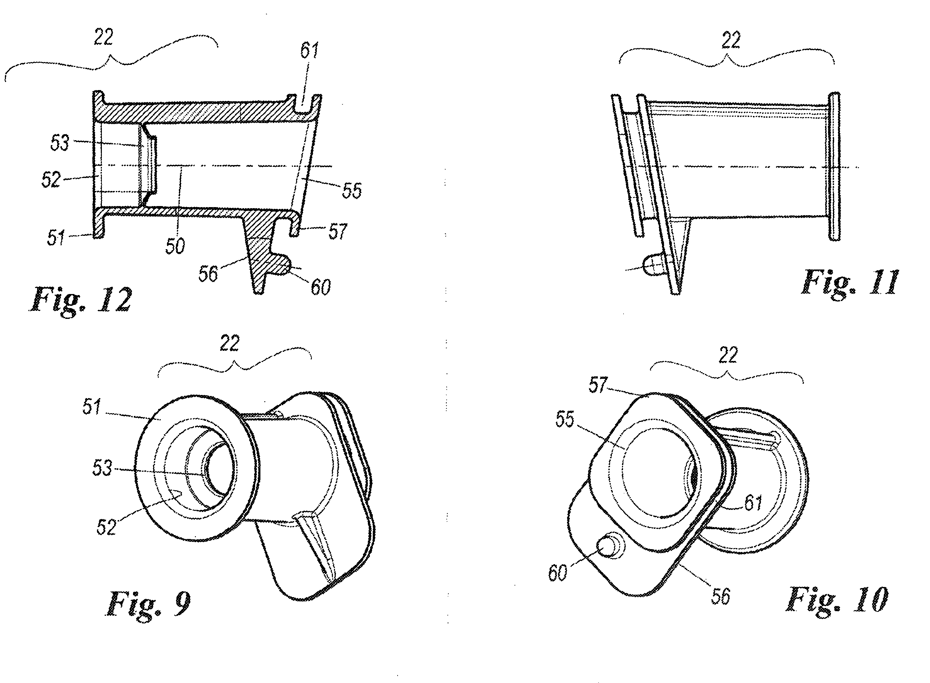

Figures 9 and 10 are perspective views, seen from opposing sides, of a component of the pan of Figure 1;
Figure 11 is a side view of the component of Figures 9 and 10; and
Figure 12 is a longitudinal section through the component of Figures 9 and 10.

With reference to said figures, an electric oven is indicated overall by 1 and comprises opposing side walls 2 and 3, a rear wall 4, an upper wall 5 and a lower wall 6, these walls defining an oven compartment 7 open at 8; the opening 8 is able to be closed by a usual door (not shown). On the side walls 2 and 3, guide and support ledges 10 are present for one or more grids, such as those 11, for supporting foods or pans, said ledges 10 supporting such grids and guiding their insertion and positioning along said walls 2 and 3 and within said compartment 7.

At the rear wall 4 a conduit 12 is provided for feeding steam into a pan or steamer 14, said conduit being detached from the wall 4 to lie spaced therefrom and separated from the lower wall 6. The conduit 12 is substantially of Z-shape and comprises a first flanged end 15 to be fixed to the rear wall 4 of the oven 1, said end cooperating with a conduit (not shown) positioned close to the wall 4 for feeding steam to the conduit 12, and being rigid with the oven 1. This steam feed conduit is not shown in the figures.

The steam feed conduit 12 hence has a broken-line shape, with its second end 20 projecting into the compartment 7 and spaced further from the upper wall 5 than is the end 14. The second end 20 is arranged to cooperate by male/female engagement with a component 22 of the pan or steamer 14 coupled to (or integral with) a wall 26 of a lid 27 of the pan 14. More specifically, the pan or steamer 14 comprises a base body or tray 30 provided with a raised flanged perimetral wall 32 and defining an internal compartment 33 with a base wall 33A. Preferably, a perforated element 34 provided with a plurality of through holes 35 is positioned in (or is integral with) said base. The perforated element 34 is raised from the base 33A to enable this latter to collect the juices or fats deriving from the cooking of the foods placed in the steamer 14 and at the same time to also circulate the steam below these foods. The perforated element 34 presents angular apertures for its handling.

The lid 27 is engaged with the wall 32 of the base tray 30 via lateral silicone gaskets 88 on the lower edge of the lid 27, to rest on the inclined walls 32 of the tray 30, hence defining a compartment within the pan 14 for steam-cooking foods.

The base tray 30 cooperates with a support 40 presenting opposing end portions 41 raised above central portions 42 arranged to engage a support grid 11. For that purpose, this latter presents a perimetral frame 43 provided with a plurality of parallel transverse elements 44; a pair of these latter comprises V-recessed portions 45 close to the frame 43 and arranged to cooperate with arms 46 of the support 40 which project from the central portions 42. These arms 46 have an undulated raised end 46A intended to cooperate with a corresponding recessed portion 45 of a transverse element 44, to provide a stable (form) fit between the support 40 and said grid, this fit maintaining the portions 41 raised from the grid 10.

On this there rests the flange 32A of the flanged perimetral wall 32, as does, essentially, the pan or steamer 14. In this position, on inserting the grid 11 into the oven compartment 7 (with the pan associated with it), the component 22 and the second end 20 of the conduit 12 automatically engage to enable the steam to be fed into the pan.

More precisely, the component 22 comprises a tubular sleeve portion 49 presenting an axial hole 50 and terminating with a flange 51 at a first opening 52 of this hole, which receives the end 20 of the conduit 12. Internally, the portion 50 presents a conical part 53 close to the opening 52 and arranged to cooperate, by contact, with that end 20 of the conduit 12 in order to essentially sealedly connect the portion 50 to said conduit.

In proximity to its other opening 55, the portion 50 presents a collar 56 separate from an end flange 57 present at the opening 55. The collar carries a projection or boss 60 projecting below the flange 57. Between this latter and said collar a recess 61 is hence present which receives the edge 62 of an aperture 63 provided in the wall 26 of the lid 27, in this manner fixing the component 22 to said lid 27. The torsional constraint is also achieved by inserting the boss 60 into a through hole 66 provided in the wall 26.

Preferably the component 22 is of silicone rubber; this achieves easy engagement with the lid 27 and with the conduit 12, in addition to an adequate seal against steam after this engagement.

The invention makes it possible to provide an arrangement of elements which can be easily fitted together for simple and reliable positioning within the oven. The elements (conduit 12 and component 22) can be centered easily and reliably without the user having to intervene actively, except in choosing which aperture of the ledges 10 to support the grid 11 with the pan 14. One embodiment of the invention has been described. Others are however possible in which the conduit 12 and the component 22 can assume different positions within the oven compartment 7, or in which the pan 14 has different shapes than those described. These embodiments are however to be considered as falling within the scope of the following claims.

## Claims

1. An electric or gas oven (1) and pan (14) arrangement for steam-cooking foods, the oven (1) presenting, for containing the pan (14), a compartment (7) with side walls (2, 3) and a rear wall (4), said pan (14) being connectable to means (12) for feeding steam into its interior, said means (12) being associated with one of said walls of the oven (1), the steam feed means (12) project into the oven compartment (7) from one (4) of the walls of said compartment (7), said means (12) being arranged to cooperate, by engagement, with sleeve component (22) associated with the pan (14) when this is inserted into said compartment (7), **characterised in that** the sleeve component (22) is associated with the closure lid (27) of the pan (14).

2. An arrangement as claimed in claim 1, **characterised in that** said steam feed means (12) project from the rear wall (4) of the oven compartment (7).

3. An arrangement as claimed in claim 1, **characterised in that** the steam feed means are a conduit (12) presenting a first end (15) to be fixed to the wall (4) of the oven compartment (7) in order to cooperate with a steam conduit associated with the oven (1) and connected to the steam generator, a second end (20) of said steam feed conduit (12) being arranged to cooperate with a sleeve (22) associated with the pan (14) and defining the steam feed counter-means.

4. An arrangement as claimed in claim 3, **characterised in that** the steam feed conduit (12) has a substantially Z-shaped broken-line conformation.

5. An arrangement as claimed in claim 3, **characterised in that** the steam feed conduit (12) cooperates with the sleeve component (22) by male/female engagement.

6. An arrangement as claimed in claim 1, **characterised in that** said sleeve component (22) is removably associated with said closure lid (27), said component (22) presenting a tubular portion (49) having an axial hole (50) and terminating with an end flange (51, 57), a first opening (52) being arranged to cooperate with the second end (20) of the steam feed conduit (12), there being present in proximity to the second opening (55) of said axial hole (50) a collar (56) spaced from the end flange (57) present at said second opening (55), between said flange (57) and said collar (56) there being present a recess (61) which removably receives the edge (62) of an aperture (63) provided in a wall (26) of said lid (27) to hence associate said component (22) with this latter.

7. An arrangement as claimed in claim 6, **characterised in that** the collar (56) carries a projection (60) adapted to cooperate with a hole (66) provided in said wall (26) of the lid (27), said cooperation torsionally constraining the component (22) to this latter.

8. An arrangement as claimed in claim 6, **characterised in that** within the axial hole (50) of the sleeve component (22), in proximity to the first opening (52), a part (53) is present on which the second end (20) of the steam feed conduit (12) rests at the moment of male/female engagement between said component (22) and conduit (12).

9. An arrangement as claimed in claim 1, **characterised in that** the pan (14) rests on a support (40) associable preferably removably with a support grid (11) able to be inserted into the oven compartment (7) by sliding it along guide and support ledges (10) present on the side walls (2, 3) of said compartment (7), said support (40) cooperating with the tray (30) of the pan (14).

10. An arrangement as claimed in claim 9, **characterised in that** the support (40) comprises portions (41, 42) positioned in different planes, a first portion (41) directly supporting the pan (14) and the second portion (42) being connected to the grid (11), the pan (14) being hence raised by this latter when supported by said support (40) connected to the grid (11).

11. An arrangement as claimed in claim 10, **characterised in that** the second portion (42) of the support (40) comprises arms (46) projecting from it and presenting ends (46A) shaped to engage recessed portions (45) of transverse elements (44) of the grid (11).

12. An arrangement as claimed in claim 1, **characterised in that** the steam feed counter-means (22) are of soft material, such as natural rubber, silicone rubber.

13. An arrangement as claimed in claim 1, **characterised in that** the pan has an upperly open body or tray (30) arranged to cooperate with a closure lid (27).

14. An arrangement as claimed in claim 13, **characterised in that** the lid (27) lowerly carries lateral gaskets fixed to its lower free edge to cooperate with side walls (32) of the tray (30).

15. An arrangement as claimed in claim 1, **characterised in that** the wall from which the steam feed means (12) project is the rear wall (4) of the oven compartment (7).

16. An arrangement as claimed in claim 1, **characterised in that** the steam feed means (12) are spaced from a lower wall of the oven (1) compartment (7).

17. An arrangement as claimed in claim 1, **characterised in that** the steam feed means (12) are arranged to automatically cooperate, by engagement, with the counter-means (22) associated with the pan (14), on termination of the insertion of this latter into the oven compartment (7).

## Patentansprüche

1. Elektro- oder Gasofen- (1) und Garbehälter- (14) Anordnung zum Dampfgaren von Lebensmitteln, wobei der Ofen (1), zur Aufnahme des Garbehälters (14) einen Raum (7) mit Seitenwänden (2, 3) und einer hinteren Wand (4) aufweist, wobei der Garbehälter (14) mit einem Mittel (12) zur Zuführung von Dampf in sein Inneres verbunden werden kann, wobei das Mittel (12) mit einer der Wände des Ofens (1) assoziiert ist, das Dampfzuführmittel (12) in den Ofenraum (7) von einer (4) der Wände des Raums (7) vorspringt, wobei das Mittel (12) angeordnet ist, um durch Eingriff mit der Muffenkomponente (22) zusammenzuarbeiten, die mit dem Garbehälter (14) assoziiert ist, wenn dieser in den Raum (7) eingeführt ist, **dadurch gekennzeichnet, dass** die Muffenkomponente (22) mit dem Verschlussdeckel (27) des Garbehälters (14) assoziiert ist.

2. Anordnung nach Anspruch 1, **dadurch gekennzeichnet, dass** das Dampfzuführmittel (12) aus der hinteren Wand (4) des Ofenraums (7) herausragt.

3. Anordnung nach Anspruch 1, **dadurch gekennzeichnet, dass** das Dampfzuführmittel eine Leitung (12) ist, die ein erstes Ende (15) aufweist, um an die Wand (4) des Ofenraums (7) befestigt zu werden, um mit einer Dampfleitung zusammenzuarbeiten, die mit dem Ofen (1) assoziiert ist und mit dem Dampfgenerator verbunden ist, wobei ein zweites Ende (20) der Dampfzuführleitung (12) angeordnet ist, um mit einer Muffe (22) zusammenzuarbeiten, die mit dem Garbehälter (14) assoziiert ist und das Dampfzuführ-Gegenmittel definiert.

4. Anordnung nach Anspruch 3, **dadurch gekennzeichnet, dass** die Dampfzuführleitung (12) eine im Wesentlichen Z-förmige Struktur einer gebrochenen Linie aufweist.

5. Anordnung nach Anspruch 3, **dadurch gekennzeichnet, dass** die Dampfzuführleitung (12) mit der Muffenkomponente (22) durch einen Innen-/Außeneingriff zusammenarbeitet.

6. Anordnung nach Anspruch 1, **dadurch gekennzeichnet, dass** die Muffenkomponente (22) abnehmbar mit dem Verschlussdeckel (27) assoziiert ist, wobei die Komponente (22) einen rohrförmigen Abschnitt (49) mit einem axialen Loch (50) aufweist und mit einem Endflansch (51, 57) endet, wobei eine erste Öffnung (52) angeordnet ist, um mit dem zweiten Ende (20) des Dampfzuführleitung (12) zusammenzuarbeiten, wobei in der Nähe der zweiten Öffnung (55) des axialen Lochs (50) eine Manschette (56) vorhanden ist, die vom Endflansch (57) beabstandet ist, der in der zweiten Öffnung (55) vorhanden ist, wobei zwischen dem Flansch (57) und der Manschette (56) eine Vertiefung (61) vorhanden ist, die entfernbar die Kante (62) einer Öffnung (63) aufnimmt, die in einer Wand (26) des Deckels (27) bereitgestellt ist, um somit die Komponente (22) mit diesem Letzteren zu assoziieren.

7. Anordnung nach Anspruch 6, **dadurch gekennzeichnet, dass** die Manschette (56) einen Vorsprung (60) trägt, der ausgelegt ist, um mit einem Loch (66) zusammenzuarbeiten, das in der Wand (26) des Deckels (27) bereitgestellt ist, wobei die Zusammenarbeit die Komponente (22) drehbar an diesen Letzteren zwingt.

8. Anordnung nach Anspruch 6, **dadurch gekennzeichnet, dass** im axialen Loch (50) der Muffenkomponente (22), in der Nähe der ersten Öffnung (52) ein Teil (53) vorhanden ist, auf dem das zweite Ende (20) der Dampfzuführleitung (12) im Augenblick des Außen-/lnneneingriffs zwischen der Komponente (22) und der Leitung (12) ruht.

9. Anordnung nach Anspruch 1, **dadurch gekennzeichnet, dass** der Garbehälter (14) auf einem Träger (40) ruht, der vorzugsweise entfernbar mit einem Tragerost (11) assoziiert werden kann, der in den Ofenraum (7) eingeführt werden kann, in dem er entlang von Führungs-und Trageleisten (10) geglitten wird, die an den Seitenwänden (2, 3) des Raums (7) vorhanden sind, wobei der Träger (40) mit der Schale (30) des Garbehälters (14) zusammenarbeitet.

10. Anordnung nach Anspruch 9, **dadurch gekennzeichnet, dass** der Träger (40) Abschnitte (41, 42) umfasst, die auf verschiedenen Ebenen angebracht sind, wobei ein erster Abschnitt (41) direkt den Garbehälter (14) trägt und der zweite Abschnitt (42) mit dem Rost (11) verbunden ist, wobei der Garbehälter (14) somit von diesem letzteren angehoben ist, wenn er durch den Träger (40), verbunden mit dem Rost (11), getragen wird.

11. Anordnung nach Anspruch 10, **dadurch gekennzeichnet, dass** der zweite Abschnitt (42) des Trägers 40) Arme (46) umfasst, die daraus hervorstehen und Enden (46A) aufweisen, die geformt sind, um in die ausgesparten Abschnitte (45) von Querelementen (44) des Rosts (11) einzugreifen.

12. Anordnung nach Anspruch 1, **dadurch gekennzeichnet**, das die Dampfzuführ-Gegenmittel (22) aus weichem Material bestehen, wie z.B. natürlichem Gummi, Silikongummi.

13. Anordnung nach Anspruch 1, **dadurch gekennzeichnet**, das der Garbehälter einen oben offenen Körper oder eine oben offene Schale (30) aufweist, die angeordnet ist, um mit einem Verschlussdeckel (27) zusammenzuarbeiten.

14. Anordnung nach Anspruch 13, **dadurch gekennzeichnet**, das der Deckel (27) unten seitliche Dichtungen trägt, die an seinem unteren freien Rand befestigt sind, um mit den Seitenwänden (32) der Schale (30) zusammenzuarbeiten.

15. Anordnung nach Anspruch 1, **dadurch gekennzeichnet, dass** die Wand, aus der das Dampfzuführmittel (12) herausragt, die hintere Wand (4) des Ofenraums (7) ist.

16. Anordnung nach Anspruch 1, **dadurch gekennzeichnet, dass** das Dampfzuführmittel (12) von einer unteren Wand des Ofen- (1) Raums (7) beabstandet sind.

17. Anordnung nach Anspruch 1, **dadurch gekennzeichnet, dass** das Dampfzuführmittel (12) angeordnet ist, um automatisch durch den Eingriff mit dem Gegenmittel (22), das mit dem Garbehälter (14) assoziiert ist, bei der Beendigung der Einführung dieses Letzteren in den Ofenraum (7) zusammenzuarbeiten.

## Revendications

1. Agencement de four électrique ou à gaz (1) et de plat (14) permettant de cuire à la vapeur des aliments, le four (1) présentant, pour contenir le plat (14), un compartiment (7) avec des parois latérales (2, 3) et une paroi arrière (4), ledit plat (14) pouvant être raccordé à un moyen (12) permettant d'alimenter en vapeur son intérieur, ledit moyen (12) étant associé à l'une desdites parois du four (1), le moyen d'alimentation en vapeur (12) faisant saillie dans le compartiment du four (7) depuis l'une (4) des parois dudit compartiment (7), ledit moyen (12) étant conçu pour coopérer, par enclenchement, avec un composant de manchon (22) associé au plat (14) quand il est inséré dans ledit compartiment (7), **caractérisé en ce que** le composant de manchon (22) est associé au couvercle de fermeture (27) du plat (14).

2. Agencement selon la revendication 1, **caractérisé en ce que** ledit moyen d'alimentation en vapeur (12) fait saillie de la paroi arrière (4) du compartiment du four (7).

3. Agencement selon la revendication 1, **caractérisé en ce que** ledit moyen d'alimentation en vapeur est un conduit (12) présentant une première extrémité (15) à fixer à la paroi (4) du compartiment du four (7) afin de coopérer avec un conduit de vapeur associé au four (1) et raccordée au générateur de vapeur, une seconde extrémité (20) dudit conduit d'alimentation en vapeur (12) étant conçue pour coopérer avec un manchon (22) associé au plat (14) et définissant des contre-moyens d'alimentation en vapeur.

4. Agencement selon la revendication 3, **caractérisé en ce que** le conduit d'alimentation en vapeur (12) a une configuration en ligne discontinue sensiblement en forme de Z.

5. Agencement selon la revendication 3, **caractérisé en ce que** le conduit d'alimentation en vapeur (12) coopère avec le composant de manchon (22) par enclenchement mâle/femelle.

6. Agencement selon la revendication 1, **caractérisé en ce que** ledit composant de manchon (22) est associé de façon amovible audit couvercle de fermeture (27), ledit composant (22) présentant une portion tubulaire (49) ayant un trou axial (50) et se terminant par une bride d'extrémité (51, 57), une première ouverture (52) étant agencée pour coopérer avec la seconde extrémité (20) du conduit d'alimentation en vapeur (12), étant présent à proximité de la seconde ouverture (55) dudit trou axial (50) un collier (56) espacé de la bride d'extrémité (57) présente au niveau de ladite seconde ouverture (55), un évidement (61) étant présent entre ladite bride (57) et ledit collier (56), ledit évidement recevant de façon amovible le bord (62) d'un orifice (63) disposé dans une paroi (26) dudit couvercle (27) pour associer ainsi ledit composant (22) à ce dernier.

7. Agencement selon la revendication 6, **caractérisé en ce que** le collier (56) comporte une protubérance (60) adaptée pour coopérer avec un trou (66) disposé dans ladite paroi (26) du couvercle (27), ladite coopération contraignant par torsion le composant (22) à ce dernier.

8. Agencement selon la revendication 6, **caractérisé en ce qu'**à l'intérieur du trou axial (50) du composant de manchon (22), à proximité de la première ouverture (52), une partie (53) est présente sur laquelle la seconde extrémité (20) du conduit d'alimentation en vapeur (12) repose au moment de l'enclenchement mâle/femelle entre ledit composant (22) et ledit conduit (12).

9. Agencement selon la revendication 1, **caractérisé en ce que** le plat (14) repose sur un support (40) qui peut être associé de préférence de façon amovible à une grille de support (11) pouvant être insérée dans le compartiment du four (7) en la glissant le long de pièces d'appui de guidage et de support (10) présentes sur les parois latérales (2, 3) dudit compartiment (7), ledit support (40) coopérant avec le plateau (30) du plat (14).

10. Agencement selon la revendication 9, **caractérisé en ce que** le support (40) comprend des portions (41, 42) positionnées dans des plans différents, une première portion (41) supportant directement le plat (14) et la seconde portion (42) étant raccordée à la grille (11), le plat (14) étant ainsi soulevé par cette dernière lorsqu'il est supporté par ledit support (40) raccordé à la grille (11).

11. Agencement selon la revendication 10, **caractérisé en ce que** la seconde portion (42) du support (40) comprend des bras (46) dépassant de celui-ci et présentant des extrémités (46A) formées pour enclencher des portions évidées (45) d'éléments transversaux (44) de la grille (11).

12. Agencement selon la revendication 1, **caractérisé en ce que** le contre-moyen d'alimentation en vapeur (22) est en matériau mou, tel que du caoutchouc naturel, de la silicone.

13. Agencement selon la revendication 1, **caractérisé en ce que** le plat comporte un plateau ou corps ouvert vers le haut (30) conçu pour coopérer avec un couvercle de fermeture (27).

14. Agencement selon la revendication 13, **caractérisé en ce que** le couvercle (27) comporte vers le bas des joints latéraux fixés à son bord libre inférieur afin de coopérer avec les parois latérales (32) du plateau (30).

15. Agencement selon la revendication 1, **caractérisé en ce que** la paroi depuis laquelle le moyen d'alimentation en vapeur (12) fait saillie est la paroi arrière (4) du compartiment du four (7).

16. Agencement selon la revendication 1, **caractérisé en ce que** le moyen d'alimentation en vapeur (12) est espacé d'une paroi inférieure du compartiment (7) du four (1).

17. Agencement selon la revendication 1, **caractérisé en ce que** le moyen d'alimentation en vapeur (12) est agencé pour coopérer automatiquement, par enclenchement, avec le contre-moyen (22) associé au plat (14), à la fin de l'insertion de ce dernier dans le compartiment du four (7).
